# EUROPÄISCHE PATENTSCHRIFT

(11) **EP 2 251 573 B1**
(45) Veröffentlichungstag und Bekanntmachung des Hinweises auf die Patenterteilung: **25.07.2012**
(21) Anmeldenummer: 10162735.4
(22) Anmeldetag: 12.05.2010
(51) Int. Cl.: F16K 1/22

(54) **Absperr- oder Regelarmatur**
Isolation or regulating fitting
Armature de verrouillage ou de réglage

(30) Priorität: 14.05.2009 DE 202009006989 U
(43) Veröffentlichungstag der Anmeldung: 17.11.2010
(73) Patentinhaber: CTV-Armaturen GmbH, 54552 Nerdlen (DE)
(72) Erfinder: Lanser, Axel, 54558 Gillenfeld (DE)
(74) Vertreter: Zenz

(56) Entgegenhaltungen:
- EP-A1- 0 551 005
- EP-A1- 0 721 080
- EP-A2- 1 174 648
- EP-A2- 1 811 211
- DE-U1- 9 217 314

## Beschreibung

Die Erfindung richtet sich auf eine in einer Rohrleitung eingebaute Absperr- oder Regelarmatur. Insbesondere richtet sich die Erfindung auf eine Armatur zur Steuerung und/oder Regelung des Durchflusses einer Substanz in einer Rohrleitung, mit einem Gehäuse und einem in dem Gehäuse drehbar angeordneten Verschlusselement, das mittels einer Antriebswelle zwischen einer eine Durchlassöffnung des Gehäuses öffnenden Stellung und einer die Durchlassöffnung des Gehäuses verschließenden Stellung verstellbar ist und das mit der Antriebswelle formschlüssig und verdrehsicher verbunden ist, wobei zur formschlüssigen und verdrehsicheren Verbindung von Antriebswelle und Klappenscheibe ein Längsabschnitt der Antriebswelle und ein korrespondierender Längsabschnitt einer in der Klappenscheibe ausgebildeten Ausnehmung jeweils einen zueinander korrespondierenden Querschnitt nach Art einer Steckverbindung aufweisen, und wobei der Längsabschnitt der Antriebswelle konisch ausgebildet ist.

Eine Armatur der eingangs genannten Art ist beispielsweise aus der EP-A-1 811 211 bekannt. Ferner ist eine gattungsgemäße Armatur aus der EP-A-721 080 bekannt, bei der durch eine Feder eine Antriebswelle permanent in Richtung eines Verschlusselements gedrückt wird, wobei eine Bewegung der Antriebswelle relativ zum Verschlusselement gegen die von der Feder ausgeübte Kraft möglich ist.

Eine derartige, auch als Absperrklappe bezeichnete Armatur wird beispielsweise in den Bereichen der Wasser-, Abwasser- und Gasversorgung eingesetzt und ist in eine Rohrleitung, beispielsweise zwischen benachbarten Flanschen, eingebaut. Mittels eines drehbar im Armaturengehäuse gelagerten Verschlusselements in Form einer Klappenscheibe wird der Durchfluss (Volumen- oder Massenstrom) eines Fluides in der Rohrleitung gesteuert und/oder geregelt. Hierbei ist die drehbar in dem Gehäuse angeordnete Klappenscheibe zwischen einer Offenstellung, bei der die Klappenscheibe eine Durchlassöffnung des Gehäuses freigibt, und einer Schließstellung, bei der die Klappenscheibe die Durchlassöffnung des Gehäuses verschließt, schwenkbar gelagert. Die Armatur ist üblicherweise derart konstruiert, dass die Klappenscheibe entweder in der Offenstellung oder in der Schließstellung angeordnet ist, um Schäden an der Armatur zu vermeiden, die in Stellungen der Klappenscheibe zwischen der Offenstellung und der Schließstellung aufgrund von Vibrationen, Schwingungen und unter bestimmten Betriebsbedingungen sogar Kavitäten infolge von an der Klappenscheibe entstehenden Wirbel- und Turbulenzgebieten verursacht werden können. Somit muss die Armatur eine einwandfreie Verstellung zwischen der die Durchlassöffnung des Gehäuses öffnenden Stellung und der die Durchlassöffnung des Gehäuses verschließenden Stellung über einen langen Zeitraum ermöglichen. Insbesondere bei der Wasser- und Gasversorgung werden hohe Anforderungen an die einwandfreie Funktionsfähigkeit der Armatur gestellt, um eine zuverlässige Versorgung zu gewährleisten.

Die Verstellung der Klappenscheibe erfolgt üblicherweise mittels einer mit der Klappenscheibe verdrehsicher verbundenen Antriebswelle, die wiederum von einem Handrad oder einem motorischen Antrieb angetrieben wird. Nachteilig bei bekannten Verbindungen von Antriebswelle und Klappenscheibe nach Art einer Welle-Nabe-Verbindung sind der starke Verschleiß der Verbindungselemente infolge der hohen Beanspruchung sowie eine Schwächung der Antriebswelle aufgrund der Kerbwirkung. Ferner tritt bei bekannten Welle-Nabe-Verbindungen, wie beispielsweise Steckverbindungen, nach mehreren Arbeitszyklen der Armatur eine Nabenaufweitung auf, wodurch sich ein proportionaler Anstieg des Wellen-Nabe-Spiels ergibt. Hinzu kommt, dass die Armatur vorwiegend in Rohrleitungen eingebaut ist, die Schwingungen unterliegen. Dabei ist es oftmals der Fall, dass die Klappenscheibe derart ausgelenkt wird, dass eine Funktionssicherheit der Armatur nicht mehr gegeben ist. Zusätzliche, durch die Substanz hervorgerufene Temperaturunterschiede erhöhen dabei das Spiel der Verbindung zwischen Klappenscheibe und Antriebswelle.

Der Erfindung liegt daher die Aufgabe zugrunde, eine Lösung zu schaffen, die auf konstruktiv einfache Weise und kostengünstig eine verbesserte Armatur bereitstellt, durch die ein zuverlässiger Betrieb über einen langen Zeitraum sichergestellt ist.

Bei einer Armatur der eingangs bezeichneten Art wird diese Aufgabe erfindungsgemäß dadurch gelöst, dass die formschlüssige und verdrehsichere Verbindung eine mechanische Spannvorrichtung aufweist, welche eine Bewegung der Antriebswelle relativ zum Verschlusselement gegen eine von der Spannvorrichtung ausgeübte Spannkraft zulässt und den konischen Längsabschnitt der Antriebswelle in den korrespondierenden Längsabschnitt des Verschlusselements drückt, wobei die mechanische Spannvorrichtung zumindest ein Profilelement, welches die Antriebswelle in deren Längsrichtung durchdringt und mit einem Ende an der Klappenscheibe befestigt ist, und ein elastisches Federelement umfasst, wobei die Antriebswelle in ihrer Längsrichtung relativ zu dem Profilelement verschiebbar ist, und wobei das elastische Federelement an den dem Verschlusselement abgewandten Enden des Profilelements und der Antriebswelle angeordnet ist und derart zwischen dem Verschlusselement und der Antriebswelle abgestützt ist, dass das elastische Federelement auf die Antriebswelle eine Druckkraft in Richtung des Verschlusselements ausübt.

Vorteilhafte und zweckmäßige Ausgestaltungen und Weiterbildungen der Erfindung ergeben sich aus den Unteransprüchen.

Mit der Erfindung wird eine Möglichkeit geschaffen, mit der das Spiel zwischen Antriebswelle und Verschlusselement auf konstruktiv einfache Weise kompensiert wird. Somit sind auch größere Fertigungstoleranzen bei der Herstellung der Armatur möglich, die zu einer Reduzierung der Herstellungskosten beitragen. Dadurch, dass die mechanische Spannvorrichtung eine Druckkraft auf die Antriebswelle ausübt und deren konischen Längsabschnitt in die in dem Verschlusselement ausgebildete Ausnehmung hinein drückt oder presst, üben Vibrationen in fluidgeführten Rohrleitungen keine die Funktionsfähigkeit und die Betriebssicherheit der Armatur, insbesondere die Verbindung von Antriebswelle und Verschlusselement, beeinflussenden Störwirkungen mehr auf die Betriebssicherheit der Armatur aus. Durch das Profilelement ist die Antriebswelle in ihrer Längsrichtung relativ zu dem Profilelement verschiebbar. Zur Erhöhung der Funktionsfähigkeit und der Betriebssicherheit der Armatur ist ein elastisches Federelement vorgesehen, durch welches eine reversible Relativbewegung von Antriebswelle und Verschlusselement möglich ist, so dass die Antriebswelle nicht nur in Richtung des Verschlusselements, sondern auch von diesem weg bewegt werden kann, wodurch insbesondere der Einfluss von Vibrationen gemindert wird. Ferner ist die Verbindung von Antriebswelle und Verschlusselement zusätzlich kraftschlüssig nach Art eines Presssitzes ausgebildet und sorgt für eine Reduzierung des Spiels zwischen Verschlusselement und Antriebswelle. Darüber hinaus sind die beweglichen Teile, d.h. die Antriebswelle und das Verschlusselement, gut justierbar und werden spielfrei gehalten.

In Weiterbildung der Erfindung ist vorgesehen, dass die Querschnittsprofile der zueinander korrespondierenden Längsabschnitte von Antriebswelle und Ausnehmung jeweils polygonförmig sind. Dadurch ist die Verbindung zwischen Antriebswelle und Verschlusselement ist schraubenlos, kerbwirkungsfrei und selbstzentrierend, wobei eine Übertragung von hohen Torsions- und Biegemomenten auf raumsparende Weise ermöglicht wird. Ferner kann aufgrund der Verbindung die Montage des Verschlusselements im Gehäuse wesentlich schneller und einfacher ausgeführt werden, wobei die konische Ausnehmung das Spiel der Verbindung von Verschlusselement und Antriebswelle infolge der Nabenaufweitung und infolge von Temperaturdifferenzen kompensiert. Auch ist dadurch eine wesentlich einfachere Zentrierung der Antriebswelle möglich. Alternativ zum polygonförmigen Querschnittsprofil ist auch die Verwendung einer Antriebswelle mit Zweiflachs denkbar, wodurch der Montageaufwand weiter reduziert werden kann.

Um den Einbauraum der mechanischen Spannvorrichtung klein zu halten, ist es weiterhin von Vorteil, wenn das elastische Federelement zumindest eine Tellerfeder, vorzugsweise eine aus mehreren Tellerfedern bestehende Federsäule, ist. Dadurch ist es möglich, dass das elastische Federelement auch bei kleinem Einbauraum sehr große Kräfte aufnehmen oder aufbringen kann.

Damit das dem Verschlusselement zugewandte Ende der Antriebswelle nicht mit der Substanz in Berührung kommt, ist es weiterhin von Vorteil, wenn die Antriebswelle in einer bis an das Verschlusselement heranreichenden Hülse in ihrer Längsrichtung verschiebbar, drehbar und gegenüber der Substanz abgedichtet gelagert ist. Die Hülse kann ein bekanntes Gleitlager oder eine Lagerbuchse aus selbstschmierender Bronze oder aus einem buntmetallfreien Lagerwerkstoff sein, um eine lange Lebensdauer und einen guten Schutz gegenüber Korrosion zu gewährleisten.

Das Verschlusselement in Form einer Klappenscheibe kann zentrisch, einfach exzentrisch, doppelt exzentrisch oder dreifach exzentrisch gelagert sein. Dabei ist die zentrische Bauweise die preiswerteste und weist weichdichtende Dichtungen auf. Demgegenüber kann eine dreifach exzentrisch gelagerte Klappenscheibe mit einer metallischen Dichtung versehen sein, so dass hohe Standzeiten bzw. hohe Wartungszyklen erreichbar sind. Vorzugsweise ist bei der erfindungsgemäßen Armatur eine doppelt exzentrisch gelagerte Klappenscheibe vorgesehen, bei der sich die Dichtung während der Schwenkbewegung der Klappenscheibe von ihrem Sitz in dem Gehäuse abhebt, so dass keinerlei Scherbewegungen zwischen dem Sitz und der Dichtung entstehen und der Einsatz eines "endlosen" Dichtelements auf der Klappenscheibe möglich ist. Dies hat darüber hinaus den Vorteil verminderter Betätigungskräfte mit perfekter Dichtfunktion und einer hohen Lebensdauer durch geringen Verschleiß der Dichtung.

In Weiterbildung der Erfindung ist vorgesehen, dass die Stellung des Verschlusselements mittels eines pneumatischen Steuer- und/oder Regelantriebs verstellbar ist. Alternativ zu einem solchen Stellantrieb, der nicht pneumatisch sein muss, kann das Verschlusselement mittels eines Handrades betätigt werden. Bei den vorstehenden Betätigungsmöglichkeiten kann ferner ein Getriebe zwischengeschaltet sein.

Es versteht sich, dass die vorstehend genannten und nachstehend zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im folgenden anhand eines Ausführungsbeispiels unter Bezugnahme auf die zugehörigen Zeichnungen näher erläutert. Es zeigt:
Figur 1 einen Schnitt durch eine erfindungsgemäße Armatur quer zur Durchflussrichtung,
Figur 2A eine vergrößerte Darstellung des Details A aus Figur 1,
Figur 2B in vergrößerter Darstellung des Details A aus Figur 1 eine alternative Ausführungsform,
Figur 3A eine vergrößerte Darstellung des Details B aus Figur 1 und
Figur 3B in vergrößerter Darstellung des Details B aus Figur 1 eine weitere alternative Ausführungsform.

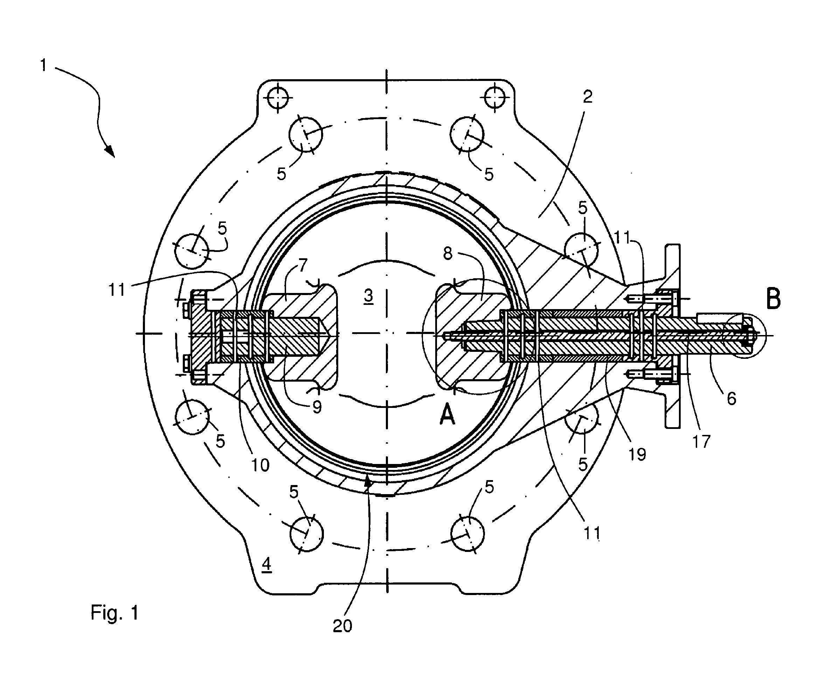

Eine in der Figur 1 als Absperrklappe ausgebildete Armatur 1 zur Steuerung und/oder Regelung des Durchflusses (Volumen- oder Massenstrom) einer Substanz in einer Rohrleitung umfasst ein Gehäuse 2 und ein in dem Gehäuse 2 drehbar gelagertes Verschlusselement in Form einer Klappenscheibe 3. Die Erfindung ist aber nicht nur auf eine Absperrklappe beschränkt, sondern kann auch in einer Kipp-Rückschlagklappe sowie in einem Kugelhahn mit einer als Verschlusselement 3 ausgebildeten Verschlusskugel verwendet werden. Ferner kann es sich bei der in der Rohrleitung geförderten Substanz um zumindest einen Feststoff, beispielsweise in pulver- und/oder granulatförmiger Konsistenz, sowie um ein gasförmiges oder flüssiges Fluid handeln.

Das Gehäuse 2 und die Klappenscheibe 3 bestehen aus einem duktilen Gusseisen, d.h. einem Gusseisen mit Kugelgraphit. Denkbar sind aber auch andere Werkstoffe für Gehäuse 2 und Klappenscheibe 3, wie beispielsweise Stahl oder Kunststoff. Die Armatur 1 wird üblicherweise in eine Rohrleitung zwischen benachbarten Flanschen eingebaut. Zu diesem Zweck weist das im wesentlichen zylindrische Gehäuse 2 an seinen Endflächen jeweils einen kragenförmigen Flanschabschnitt 4 auf, der von dem Gehäuse 2 radial nach außen hin hervorsteht und mehrere umfangsmäßig verteilte Durchgangslöcher 5 zum Verbinden mit einem entsprechenden Rohrleitungsabschnitt umfasst.

Die Klappenscheibe 3 ist schwenkbar oder schwenkbeweglich in einer Durchlassöffnung des Gehäuses 2 angeordnet. Zur Änderung des Durchflusses wird die drehbar gelagerte Klappenscheibe 3 mittels einer Antriebswelle 6 zwischen einer die Durchlassöffnung des Gehäuses 2 öffnenden Stellung (Offenstellung) und einer die Durchlassöffnung des Gehäuses 2 verschließenden Stellung (Schließstellung) verschwenkt, wobei die in Figur 1 gezeigte Stellung der Klappenscheibe 3 die Schließstellung ist. Die Antriebswelle 6 ragt mit ihrem der Klappenscheibe 3 abgewandten Ende aus dem Gehäuse 2 der Armatur 1 hervor und ist an diesem Ende zur Veränderung der Stellung der Klappenscheibe 3 mit einem Antriebs- oder Betätigungselement gekoppelt. Das Antriebs- oder Betätigungselement kann ein Handrad, ein Steuer- und/oder Regelantrieb oder ein pneumatischer Stellantrieb sein, bei dem optional ein Getriebe vorsehen sein kann.

Zur drehbaren bzw. schwenkbaren Lagerung weist die Klappenscheibe 3 ein erstes Lagerelement 7 und ein zweites Lagerelement 8 auf, die an gegenüberliegenden Seiten der Klappenscheibe 3 nach Art einer Nabe angeordnet sind. Ein Lagerzapfen 9 ist in eine in dem ersten Lagerelement 7 ausgebildete Ausnehmung eingesetzt und drehfest mit dem ersten Lagerelement 7 verbunden. Die Verbindung von Lagerzapfen 9 und Lagerelement 7 kann als Polygon-Verbindung ausgeführt sein. Zusätzlich oder alternativ kann das aus dem Gehäuse 2 der Armatur herausragende Ende der Antriebswelle 6 einen polygonförmigen Querschnitt aufweisen und über eine entsprechende Polygon-Verbindung mit dem nicht dargestellten Antriebs- oder Betätigungselement gekoppelt sein. Der Lagerzapfen 9 ist ferner drehbar in einer Lagerbuchse 10 gelagert, die an dem Gehäuse 2 der Armatur 1 drehfest angebracht ist. Zur Abdichtung gegenüber dem durch die Rohrleitung und dem durch die Armatur 1 strömenden Fluid bzw. dem von der Armatur 1 gestoppten Fluid umfasst die Lagerbuchse 10 mehrere O-Ringe 11, welche in deren Längsrichtung in diese eingesetzt bzw. eingebaut sind. Der Lagerzapfen 9 sowie die Antriebswelle 6 bestehen aus Chromstahl.

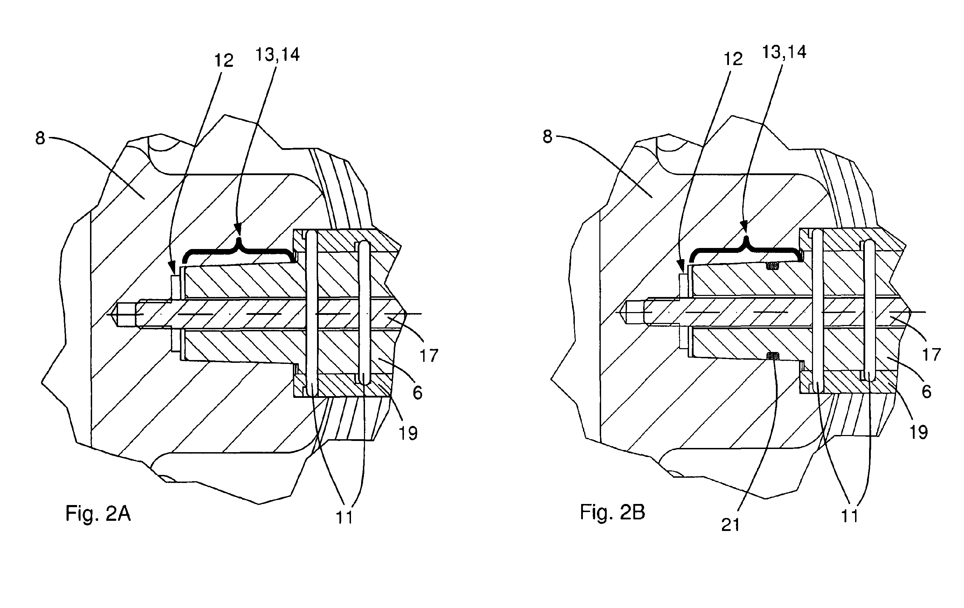

An der dem ersten Lagerelement 7 gegenüberliegenden Seite der Klappenscheibe 3 ist das zweite Lagerelement 8 angeordnet. Das zweite Lagerelement 8 weist im Gegensatz zum ersten Lagerelement 7 eine mehrfach gestufte Ausnehmung 12 auf, wobei beide Lagerelemente 7, 8 aus Chrom/Nickelstahl bestehen. In die mehrfach gestufte Ausnehmung 12 ist die Antriebswelle 6 derart eingesteckt, dass die Klappenscheibe 3 formschlüssig und verdrehsicher mit der Antriebswelle 6 verbunden ist. Zur formschlüssigen und verdrehsicheren Verbindung von Antriebswelle 6 und Klappenscheibe 3 weisen ein Längsabschnitt 13 der Antriebswelle 6 und ein korrespondierender Längsabschnitt 14 der in der Klappenscheibe 3 ausgebildeten Ausnehmung 12 jeweils einen zueinander korrespondierenden Querschnitt auf, so dass die Antriebswelle 6 in die Ausnehmung 12 des zweiten Lagerelements 8 bzw. in den Längsabschnitt 14 nach Art einer Steckverbindung eingesteckt ist. Die beiden Längsabschnitte 13, 14 sind durch die geschweifte Klammer in den Figuren 2A und 2B näher gekennzeichnet. Die zueinander korrespondierenden Querschnitte bzw. Querschnittsprofile der beiden Längsabschnitte 13, 14 sind jeweils polygonförmig, wobei in der alternativen Ausführungsform von Figur 2B der konische Längsabschnitt 13 der Antriebswelle 6 im Vergleich zu der Ausführungsform in Figur 2A zusätzlich eine O-Ringdichtung 21 aufweist. Die Übertragung des Drehmoments zwischen Antriebswelle 6 und der Klappenscheibe 3 findet ausschließlich im Bereich der beiden Längsabschnitte 13, 14 statt. Die formschlüssige und verdrehsichere Verbindung ermöglicht die Übertragung des Drehmoments von der Antriebswelle 6 auf das Lagerelement 8 und damit auch auf die Klappenscheibe 3 nach Art einer Wellen-Nabe-Verbindung, die als Steckverbindung ausgebildet ist. Diese Polygon-Steckverbindung hat den Vorteil, dass sie selbstzentrierend und kerbwirkungsfrei ist. Die Krafteinleitung bzw. Kraftübertragung erfolgt kontinuierlich bei gleichzeitig großer Betriebssicherheit. Zur Erhöhung der Verbindungssicherheit zwischen Klappenscheibe 3 und Antriebswelle 6 sind der Längsabschnitt 13 der Antriebswelle 6 und der korrespondierende Längsabschnitt 14 der Ausnehmung 12 konisch ausgestaltet, so dass zusätzlich zum Formschluss ein Kraftschluss zwischen Klappenscheibe 3 und Antriebswelle 6 gegeben ist.

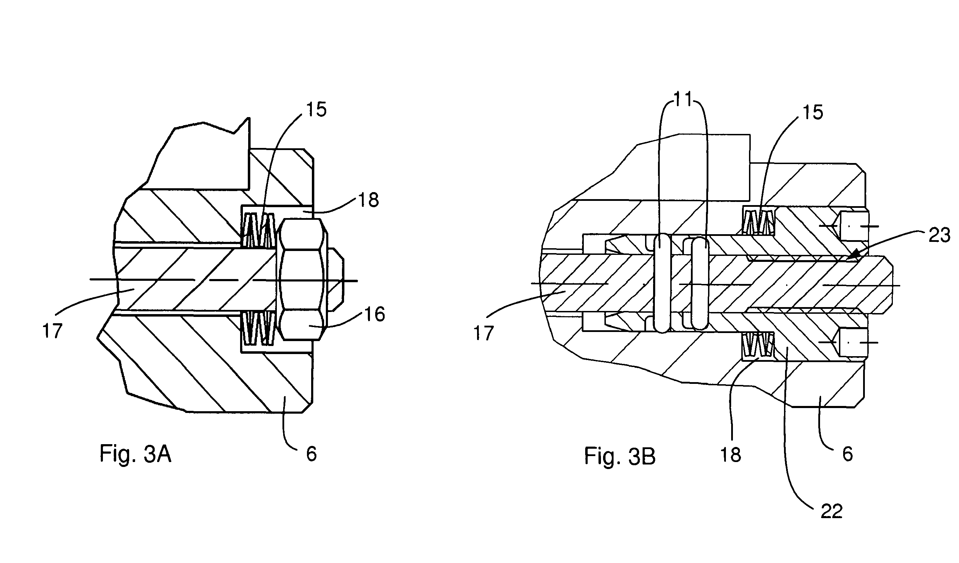

Die formschlüssige und verdrehsichere Verbindung von Klappenscheibe 3 und Antriebswelle 6 umfasst neben den beiden korrespondierend zueinander ausgebildeten Längsabschnitten 13, 14 eine mechanische Spannvorrichtung, durch die eine Bewegung der Antriebswelle 6 relativ zur Klappenscheibe 3 gegen eine von der mechanischen Spannvorrichtung ausgeübte Spannkraft möglich ist. Die mechanische Spannvorrichtung dient dazu, den Längsabschnitt 13 der Antriebswelle 6 in den korrespondierenden Längsabschnitt 14 der Klappenscheibe 3 zu drücken oder zu pressen. Bewirkt wird diese auf die Antriebswelle 6 ausgeübte Druckkraft von einem elastischen Federelement 15 der mechanischen Spannvorrichtung. Das elastische Federelement 15 und dessen Anordnung ist im Detail in den Figuren 3A und 3B dargestellt. Das elastische Federelement 15 ist in einer Ausnehmung 18, die an dem der Klappenscheibe 3 abgewandten Ende der Antriebswelle 6 ausgebildet ist, angeordnet und übt auf die Antriebswelle 6 eine Druckkraft in Richtung der Klappenscheibe 3 aus. Bei der in Figur 3A dargestellten Ausführungsform ist das elastische Federelement 15 an einer Mutter 16 abgestützt, die auf ein erstes Ende eines Profilelements 17 geschraubt ist. Das Profilelement 17 durchdringt die Antriebswelle 6 in deren Längsrichtung und ist mit seinem der Klappenscheibe 3 zugewandten Ende in der mehrfach gestuften Ausnehmung 12 des zweiten Lagerelements 8 befestigt, wie im Detail in den Figuren 2A und 2B dargestellt ist. In der in Figur 3B dargestellten Ausführungsform ist das elastische Federelement 15 an einem Hohlbolzen 22 abgestützt, der in die Ausnehmung 18 der Antriebswelle 6 eingesetzt ist und das Profilelement 17 umgreift, wobei der Hohlbolzen 22 zur (optionalen zusätzlichen) Abdichtung der Armatur 1 zwei O-Ringe 11 aufweist und mittels einer an sich bekannten Gewindeverbindung 23 an dem Profilelement 22 befestigt bzw. auf dieses aufgeschraubt ist.

Bei dem elastischen Federelement 15 handelt es sich um eine Tellerfeder, die in der Ausnehmung 18 gegen die Antriebswelle 6 drückt und dabei von der Mutter 16 abgestützt wird. Mittels der Mutter 16 kann die von dem elastischen Element 15 auf die Antriebswelle 6 ausgeübte Druckkraft bzw. die Vorspannung reguliert werden. Das elastische Federelement 15 umfasst in der dargestellten Ausführungsform zwei Tellerfedern, die eine Federsäule bilden. Diese übt eine in Längsrichtung des Profilelements 17 wirkende Kraft auf die Antriebswelle 6 aus und drückt diese in das zweite Lagerelement 8. Damit die Antriebswelle 6 in ihrer Längsrichtung relativ zu dem Profilelement 17 verschiebbar ist, ist die Antriebswelle 6 in einer Hülse bzw. einer Lagerbuchse 19 verschiebbar und drehbar gelagert. Die Lagerbuchse 19 sowie die Lagerbuchse 10 bestehen aus selbstschmierender Bronze und gewähren eine sichere und lange Lebensdauer. Die Lagerbuchse 19 ist in und/oder an dem Gehäuse 2 befestigt und weist mehrere O-Ringe 11 zur Wellen- bzw. Zapfenabdichtung auf. Die O-Ringe 11 zur Abdichtung der Antriebswelle 6 und des Lagerzapfens 9 sowie eine um den Umfangsrand der Klappenscheibe 3 umlaufende Profildichtung 20 beinhalten ein terpolymeres Elastomer, beispielsweise EPDM (Ethylen-Propylen-Dien-Kautschuk) oder NBR (Nitril-Butadien-Kautschuk), das eine hohe Elastizität, eine hohe chemische Resistenz und eine gute Feuchtigkeitsbeständigkeit aufweist. Ferner können alle Gussteile der Armatur 1 zur Erhöhung des Korrosionsschutzes mit einem Epoxhid-Harz-Pulver beschichtet sein.

Die im wesentlichen scheibenförmig ausgebildete Klappenscheibe 3 ist doppelt exzentrisch im Gehäuse 2 der Armatur 1 gelagert. Dadurch erfolgt die Lagerung der Klappenscheibe 3 hinter der Dichtebene, so dass ein endloses Dichtelement 20 auf der Klappenscheibe 3 für eine perfekte Abdichtung der Armatur 1 sorgen kann. Die Erfindung ist aber nicht auf diese Art der Lagerung der Klappenscheibe 3 beschränkt. Denkbar ist auch eine zentrische, eine einfach exzentrische oder eine dreifach exzentrische Einbauweise der Klappenscheibe 3 im Gehäuse 2 der Armatur 1.

Alternativ zu dem beschriebenen Ausführungsbeispiel kann die Antriebswelle 6 bis in das erste Lagerelement 7 hindurch geführt sein, so dass auf den Lagerzapfen 9 verzichtet werden kann und die Antriebswelle 6 lediglich in dem zweiten Nabenelement 8 verschiebbar und drehbar geführt ist. Die formschlüssige und verdrehsichere Verbindung mit mehrfach gestufter Ausnehmung 12 und dem polygonen Querschnittsprofilen zwischen Klappenscheibe 3 und Antriebswelle 6 ist dann nicht mehr in dem zweiten Lagerelement 8, sondern in dem ersten Lagerelement 7 ausgebildet, wobei das Profilelement 17 ferner in dem ersten Lagerelement 7 fixiert wird.

## Patentansprüche

1. Armatur (1) zur Steuerung und/oder Regelung des Durchflusses einer Substanz in einer Rohrleitung, mit einem Gehäuse (2) und einem in dem Gehäuse (2) drehbar angeordneten Verschlusselement (3), das mittels einer Antriebswelle (6) zwischen einer eine Durchlassöffnung des Gehäuses (2) öffnenden Stellung und einer die Durchlassöffnung des Gehäuses (2) verschließenden Stellung verstellbar ist und das mit der Antriebswelle (6) formschlüssig und verdrehsicher verbunden ist, wobei zur formschlüssigen und verdrehsicheren Verbindung von Antriebswelle (6) und Verschlusselement (3) ein Längsabschnitt (13) der Antriebswelle (6) und ein korrespondierender Längsabschnitt (14) einer in dem Verschlusselement (3) ausgebildeten Ausnehmung (12) jeweils einen zueinander korrespondierenden Querschnitt nach Art einer Steckverbindung aufweisen, und wobei der Längsabschnitt (13) der Antriebswelle (6) konisch ausgebildet ist,
**dadurch gekennzeichnet, dass**
die formschlüssige und verdrehsichere Verbindung eine mechanische Spannvorrichtung aufweist, welche eine Bewegung der Antriebswelle (6) relativ zum Verschlusselement (3) gegen eine von der Spannvorrichtung ausgeübte Spannkraft zulässt und den konischen Längsabschnitt (13) der Antriebswelle (6) in den korrespondierenden Längsabschnitt (14) des Verschlusselements (3) drückt,
wobei die mechanische Spannvorrichtung zumindest ein Profilelement (17), welches die Antriebswelle (6) in deren Längsrichtung durchdringt und mit einem Ende an dem Verschlusselement (3) befestigt ist, und ein elastisches Federelement (15) umfasst,
wobei die Antriebswelle (6) in ihrer Längsrichtung relativ zu dem Profilelement (17) verschiebbar ist, und
wobei das elastische Federelement (15) an den dem Verschlusselement (3) abgewandten Enden des Profilelements (17) und der Antriebswelle (6) angeordnet ist und derart zwischen dem Verschlusselement (3) und der Antriebswelle (6) abgestützt ist, dass das elastische Federelement (15) auf die Antriebswelle (6) eine Druckkraft in Richtung des Verschlusselements (3) ausübt.

2. Armatur (1) nach Anspruch 1, **dadurch gekennzeichnet, dass** die Querschnittsprofile der zueinander korrespondierenden Längsabschnitte (13, 14) von Antriebswelle (6) und Ausnehmung (12) jeweils polygonförmig sind.

3. Armatur (1) nach Anspruch 1, **dadurch gekennzeichnet, dass** das elastische Federelement (15) zumindest eine Tellerfeder, vorzugsweise eine aus mehreren Tellerfedern bestehende Federsäule, ist.

4. Armatur (1) nach einem der vorhergehenden Ansprüche,
**dadurch gekennzeichnet, dass** die Antriebswelle (6) in einer bis an das Verschlusselement (3) heranreichenden Hülse (19) in ihrer Längsrichtung verschiebbar, drehbar und gegenüber der Substanz abgedichtet gelagert ist.

5. Armatur (1) nach einem der vorhergehenden Ansprüche,
**dadurch gekennzeichnet, dass** das Verschlusselement (3) doppelt exzentrisch gelagert ist.

6. Armatur (1) nach einem der vorhergehenden Ansprüche, **dadurch gekennzeichnet, dass** die Stellung des Verschlusselements (3) mittels eines pneumatischen Steuer- und/oder Regelantriebs verstellbar ist.

## Claims

1. A valve (1) for controlling and/or regulating the flow of a substance in a conduit including a housing (2) and a closure element (3), which is rotatably arranged in the housing (2) and is moveable by means of a drive shaft (6) between a position in which a flow opening in the housing (2) is open and a position in which the flow opening in the housing (2) is closed and which is positively and rotationally fixedly connected to the drive shaft (6), wherein for the positive and rotationally fixed connection of the drive shaft (6) and closure element (7) a longitudinal section (13) of the drive shaft (6) and a corresponding longitudinal section (14) of an opening (12) formed in the closure element (13) each have a cross section corresponding to one another in the manner of a plug connection and wherein the longitudinal section (13) of the drive shaft (6) is conical, **characterised in that** the positive and rotationally fixed connection includes a mechanical clamping device, which permits movement of the drive shaft (6) relative to the closure element (3) against a clamping force exerted by the clamping device and presses the conical longitudinal section (13) of the drive shaft (6) into the corresponding longitudinal section (14) of the closure element (3), wherein the mechanical clamping device includes at least one profile element (17), which passes through the drive shaft (6) in its longitudinal direction and is fastened at one end to the closure element (3) and an elastic spring element (15), wherein the drive shaft (6) is moveable in its longitudinal direction relative to the profile element (17) and wherein the elastic spring element (15) is arranged at the ends remote from the closure element (3) of the profile element (17) and of the drive shaft (6) and is supported between the closure element (3) and the drive shaft (6) such that the elastic spring element (15) exerts a compressive force on the drive shaft (6) in the direction of the closure element (3).

2. A valve (1) as claimed in claim 1, **characterised in that** the cross sectional profiles of the longitudinal sections (13, 14) corresponding to one another of the drive shaft (6) and opening (12) are both polygonal.

3. A valve (1) as claimed in claim 1, **characterised in that** the elastic spring element (15) is at least one plate spring, preferably a spring column consisting of a plurality of plate springs.

4. A valve (1) as claimed in one of the preceding claims, **characterised in that** the drive shaft (6) is mounted in a sleeve (19) extending up to the closure element (3) so as to be moveable in its longitudinal direction, rotatable and sealed with respect to the substance.

5. A valve (1) as claimed in one of the preceding claims, **characterised in that** the closure element (3) is double offset mounted.

6. A valve (1) as claimed in one of the preceding claims, **characterised in that** the position of the closure element (3) is adjustable by means of a pneumatic control and/or regulating drive.

## Revendications

1. Robinet (1) pour la commande et/ou le réglage du débit d'une substance dans une canalisation, comprenant un corps (2) et un élément d'obturation (3), disposé d'une manière déplaçable en rotation dans le corps (2), qui est réglable au moyen d'un arbre de commande (6) entre une position ouvrant une ouverture de passage du corps (2) et une position obturant l'ouverture de passage du corps (2) et qui est rendu solidaire de l'arbre de commande (6) par complémentarité de formes et d'une manière interdisant une rotation, tandis que, pour la solidarisation, par complémentarité de formes et d'une manière interdisant une rotation, de l'arbre de commande (6) et de l'élément d'obturation (3), un tronçon longitudinal (13) de l'arbre de commande (6) et un tronçon longitudinal (14) correspondant d'un logement (12) ménagé dans l'élément d'obturation (3) présentent respectivement des sections transversales se correspondant entre elles, à la façon d'une jonction par emboîtement, le tronçon longitudinal (13) de l'arbre de commande (6) étant réalisé de forme conique,
**caractérisé en ce que**
la solidarisation par complémentarité de formes et d'une manière interdisant une rotation comprend un dispositif mécanique de mise sous tension, lequel autorise un mouvement de l'arbre de commande (6) vis-à-vis de l'élément d'obturation (3) à l'encontre d'une force de mise sous tension exercée par le dispositif de mise sous tension et pousse sous pression le tronçon longitudinal (13) conique de l'arbre de commande (6) dans le tronçon longitudinal (14) correspondant de l'élément d'obturation (3),
tandis que le dispositif mécanique de mise sous tension comprend au moins un élément profilé (17), qui traverse l'arbre de commande (6) suivant sa direction longitudinale et est fixé à une extrémité à l'élément d'obturation (3), et un élément faisant ressort (15) élastique,
que l'arbre de commande (6) est déplaçable en translation suivant sa direction longitudinale vis-à-vis de l'élément profilé (17), et
que l'élément faisant ressort (15) élastique est disposé aux extrémités de l'élément profilé (17) et de l'arbre de commande (6) situées à l'opposé de l'élément d'obturation (3) et est appliqué en appui entre l'élément d'obturation (3) et l'arbre de commande (6) d'une façon telle que l'élément faisant ressort (15) élastique exerce sur l'arbre de commande (6) une force de pression en direction de l'élément d'obturation (3).

2. Robinet (1) suivant la revendication 1, **caractérisé en ce que** les profils en section transversale des tronçons longitudinaux (13, 14), se correspondant l'un l'autre, de l'arbre de commande (6) et du logement (12) sont chacun de forme polygonale.

3. Robinet (1) suivant la revendication 1, **caractérisé en ce que** l'élément faisant ressort (15) élastique est au moins un ressort Belleville, de préférence un empilement de ressorts constitué de plusieurs ressorts Belleville.

4. Robinet (1) suivant l'une des revendications précédentes, **caractérisé en ce que** l'arbre de commande (6) est déplaçable en translation, suivant sa direction longitudinale, dans un manchon (19) s'étendant jusqu'à l'élément d'obturation (3), et est déplaçable en rotation, avec une étanchéité assurée vis-à-vis de la substance.

5. Robinet (1) suivant l'une des revendications précédentes, **caractérisé en ce que** l'élément d'obturation (3) est monté à palier de manière double et de manière excentrée.

6. Robinet (1) suivant l'une des revendications précédentes, **caractérisé en ce que** la position de l'élément d'obturation (3) est réglable au moyen d'un entraînement de commande et/ou de réglage de type pneumatique.
